# EUROPÄISCHE PATENTANMELDUNG

(11) **EP 0 873 849 A2**
(43) Veröffentlichungstag der Anmeldung: **28.10.1998**
(21) Anmeldenummer: 98106990.9
(22) Anmeldetag: 17.04.1998
(51) Int. Cl.: B29C 70/08, B29C 70/54, B29B 11/16

(54) **Beanspruchungsgerechtes Verstärkungsbebilde**

(30) Priorität: 22.04.1997 DE 19716666
(71) Anmelder: Institut für Polymerforschung Dresden e.V., 01069 Dresden (DE)
(72) Erfinder: Feltin, Dirk, 01219 Dresden (DE); Gliesche, Konrad, 01465 Langebrück (DE); Rothe, Horst, 01069 Dresden (DE)
(74) Vertreter: Rauschenbach, Marion, Dipl.-Ing.

(57) **Zusammenfassung**

Die Erfindung bezieht sich das Gebiet der technischen Textilien und betrifft beanspruchungsgerechte Verstärkungsgebilde, wie sie als Verstärkung in hochbeanspruchten Faserverbund-Bauteilen eingesetzt werden.

Die Aufgabe der Erfindung besteht darin, Verstärkungsstrukturen in hohem Grade beanspruchungsgerecht auszubilden und eine dichte Anordnung der Verstärkungsfäden zu erlauben.

Die Aufgabe wird gelöst durch ein beanspruchungsgerechtes Verstärkungsgebilde (1), bei denen Verstärkungsfäden (3) in einer oder mehreren Lagen übereinander auf einem ebenen Grundmaterial (2) befestigt sind, mit beanspruchungsgerechter Legung der Verstärkungsfäden (3), mit einem Kernbereich (4) in dem die Verstärkungsfäden (3) unverschiebbar und verschiebbar am Grundmaterial (2) positioniert sind, wobei die verschiebbare Positionierung durch einen oder mehrere Tunnel (8) erfolgt und bei denen die den oder die Tunnel (8) durchlaufenden Verstärkungsfäden (3) außerhalb des Kernbereiches (4) einen Fadenvorrat (7) aufweisen.

## Beschreibung

Die Erfindung bezieht sich das Gebiet der technischen Textilien und betrifft beanspruchungsgerechte Verstärkungsgebilde, wie sie als Verstärkung in hochbeanspruchten Faserverbund-Bauteilen eingesetzt werden, die z.B. in Flugzeugen, Sportgeräten oder dynamisch hochbelasteten Maschinenelementen verwendet werden können.

Langfaser-Verbunde (LFV) sind sehr gute Leichtbauwerkstoffe: Sie besitzen hervorragende mechanische Eigenschatten, wie hohe Steifigkeiten und Festigkeiten bei gleichzeitig geringer Dichte, vorausgesetzt, daß die Verstärkungsfasern in Beanspruchungsrichtung, d.h. in Richtung des Kraftflusses und gestreckt positioniert sind. Nur so ist es möglich, ihre hervorragenden Eigenschaften optimal zu nutzen.

Hohe Steifeforderungen können sowohl durch eine beanspruchungsgerechte Lage der Verstärkungsfasern als auch durch eine die Steife erhöhende räumliche Gestaltung des Bauteils erfolgen, wie durch Sicken, Rippen und andere Tiefzüge, wodurch die Bauteileigenschaften zusätzlich verbessert werden. Eine räumliche Gestaltung des Bauteils kann aber auch aus funktionellen Gründen erforderlich sein.

Räumliche Baukörper aus LFV werden klassischerweise aus zugeschnittenen Verstärkungs-Halbzeugen (wie Matten, Geweben, Gelegen) aufgebaut, wobei zur Formenanpassung - nach 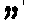 Schneiderart" - auch Einschnitte und abnäherartige Falten angewandt bzw. einzelne Teile auflaminiert werden. Der Verlauf des Kraftflusses im beanspruchten Bauteil wird von der Lage der Verstärkungsfasern im wesentlichen nicht berücksichtigt. Hochleistungsverbunde sind auf diese Weise nicht herstellbar.

Unter Verwendung von verformbaren Verstärkungshalbzeugen, wie lose eingestellten Carbon-Geweben, läßt sich bis zu einem gewissen Grad ein faltenloses Tiefziehen erreichen. Die dazu benötigten Längen an Verstärkungsmaterial ergeben sich dadurch, daß die sich rechtwinklig kreuzenden Kett- und Schußfäden örtlich diagonal verzerrt werden, wodurch aber auch die Lage dieser Verstärkungsfäden beeinträchtigt wird. Eine 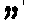 beanspruchungsgerechte" Verstärkung läßt sich beim Tiefziehen auf solche Art nicht realisieren.

Gewirke und Gestricke sind strukturbedingt gut tiefziehfähig. Strukturbedingt ist bei diesen textilen Flächengebilden aber auch der Fadenverlauf gekrümmt. Das Erreichen hoher Festigkeiten und hoher Steifigkeiten eines Bauteils erfordert hingegen einen gestreckten Fadenverlauf. Hochleistungsverbunde lassen sich somit auf Basis von Gewirken und Gestricken nicht herstellen.

Desweiteren sind spezielle räumliche Gewebe (shape weaving) bekannt, die sich auch bei relativ gestrecktem Fadenverlauf an stark räumliche Strukturen anpassen lassen. Der Fadenverlauf ist jedoch weitgehend technologisch vorgegeben, weshalb eine beanspruchungsgerechte Verstärkung damit nur bedingt realisiert werden kann. Außerdem erfordert diese Technologie für jedes Bauteil hohe Aufwendungen in der Vorbereitung, woraus üblicherweise ein ökonomischer Zwang zu hohen Stückzahlen resultiert, d.h. diese Technologie ist nur wenig flexibel.

Eine tatsächlich beanspruchungsgerechte Anordnung der Verstärkungsfäden läßt sich durch formbare, multiaxiale Verstärkungsgebilde erreichen, bei denen die Verstärkungsfäden mittels einer Sticktechnologie in jeder beliebigen Richtung und auch mehrfach übereinander beanspruchungsgerecht positioniert werden können (EP 0567 845 A1). Es handelt sich dabei um eine rechnergestützte automatische Fertigung mit der es grundsätzlich möglich ist, beanspruchungsgerechte Verstärkungsgebilde reproduzierbar herzustellen.

Durch Einarbeiten von Fadenreserven ist es (nach EP 0567 845 A1) auch möglich, örtliche Auswölbungen zu berücksichtigen. Bei dieser so erreichten Tiefziehfähigkeit wird beim räumlichen Verformen die positionierte Fadenlage der übrigen Bereiche nicht verändert. Nachteilig ist dabei jedoch, daß die schlingenartig aufgebrachten Fadenreserven entsprechenden Platz erfordern. Auf diese Weise lassen sich stringerartige Verstärkungsstrukturen realisieren. Beanspruchungsgerechte Verstärkungsgebilde mit einer dichten Anordnung von Verstärkungsfäden lassen sich damit jedoch nicht herstellen.

Mit der vorliegenden Erfindung sollen die dargestellten Nachteile behoben werden. Insbesondere kommt es im Vergleich zu EP 0567 845 A1 darauf an, durch eine grundsätzlich andere Positionierung der Fadenreserven (Vermeidung von Verstärkungsfaden-Schlingen) auch eine dichtere Anordnung von Verstärkungsfäden realisieren zu können.

Die Aufgabe der Erfindung besteht darin, beanspruchungsgerechte Verstärkungsgebilde anzugeben, deren Verstärkungsstrukturen in hohem Grade beanspruchungsgerecht ausgebildet sind und die auch in dem oder den räumlich zu verformenden Bereich(en) eine dichte Anordnung der Verstärkungsfäden erlauben.

Gelöst wird die Aufgabe durch die im Anspruch 1 angegebenen Merkmale. Weiterbildungen sind Gegenstand der Unteransprüche.

Durch die erfindungsgemäße Lösung wird es erstmals möglich, aus einem beanspruchungsgerechten Verstärkungsgebilde mit zumindest bereichsweiser Legung der Verstärkungsfäden entsprechend der Beanspruchung, einen LFV durch eine räumliche Verformung, meist durch Tiefziehen, herzustellen, bei dem ebenfalls in den Bereichen der räumlichen Verformung zumindest bereichsweise eine beanspruchungsgerechte Legung der Verstärkungsfäden realisiert werden kann und bei dem die Verstärkungsfäden in den Bereichen der räumlichen Verformung auch dicht angeordnet sein können.

Dabei ist von technologisch besonderem Vorteil, daß dazu erforderliche Fadenvorräte außerhalb des Kernbereiches des beanspruchungsgerechten Verstärkungsgebildes angeordnet sind.

Der Kernbereich des beanspruchungsgerechten Verstärkungsgebildes besteht aus Bereichen, in denen die Verstärkungsfäden fest fixiert sind und aus Bereichen in denen die Verstärkungsfäden verschiebbar angeordnet sind.

Die Verschiebbarkeit eines verschiebbar angeordneten Verstärkungsfadens in Längsrichtung wird bei der erfindungsgemäßen Lösung dadurch erreicht, daß der Verstärkungsfaden in einem Tunnel läuft, wobei dieser Tunnel aus Nähfäden oder auch aus Verstärkungsfäden gebildet sein kann. Bei der anschließenden räumlichen Verformung rutschen die Fadenvorräte durch diese Tunnel nach.

Der außerhalb des Kernbereiches angeordnete, für die räumliche Verformung vorgesehene Fadenvorrat wird hinsichtlich seiner jeweiligen Länge entsprechend der vorgesehenen räumlichen Verformung bemessen.

Ein weiterer Vorteil der erfindungsgemäßen Lösung besteht darin, daß die beanspruchungsgerechte Lage der Verstärkungsfäden bei der räumlichen Verformung in den fest fixierten und in den verschiebbaren Bereichen nicht verzerrt wird, d. h., daß die ursprüngliche Positionierung der Verstärkungsfäden im Verstärkungsgebilde dort auch nach der räumlichen Verformung noch erhalten ist. Demgegenüber erfolgt eine Verzerrung der Verstärkungsfäden beim räumlichen Verformen zwischen diesen beiden Bereichen in jeweils beabsichtigter Weise.

Das Herstellen der erfindungsgemäßen Schlaufen oder der Bildung eines Tunnels aus Schlaufen für die Positionierung der verschiebbaren Verstärkungsfäden kann beispielsweise durch eine Sticktechnologie mit Hilfe von weiten Zick-Zack-Stichen ausgeführt werden, wobei der Verstärkungsfaden nicht durchstochen wird.

Bei der Herstellung eines Verstärkungsgebildes aus mehreren Lagen verschiebbarer Verstärkungsfäden ist es bei Anwendung der Sticktechnologie möglich, zwischen den sich kreuzenden Verstärkungsfäden fadenfreie Zwischenräume anzuordnen, die die Einstichpunkte für die Nähnadel bilden. Dadurch lassen sich mehrere Lagen verschiebbarer Verstärkungsfäden realisieren.

Als Verstärkungsfäden können alle für LFV üblichen Faserstoffe eingesetzt werden, wie Rovings aus Glas- oder Carbonfilamenten, ebenso aus aromatischen Polyamidfäden. Sie können auch aus Faserbändern dehnungsarmer Faserstoffe bestehen, wie Flachs, Hanf, Ramie. Zum Herstellen von thermoplastischen LFV können auch Hybridfäden aufgenäht werden, die aus Verstärkungsfäden und faserformigen, thermoplastischen Materialien bestehen, beispielsweise auf Basis von Polyamid, Polyethylen, Polypropylen. Weiterhin besteht die Möglichkeit, beispielsweise Roving und Foliebändchen geschichtet aufzunähen (film stacking).

Eine vorteilhafte Ausgestaltung der Erfindung besteht darin, bei der Herstellung eines beanspruchungsgerechten Verstärkungsgebildes aus mehreren Lagen solche Verstärkungsfäden zu verwenden, deren Filamente weder miteinander verklebt noch verdreht sind. Dadurch ist es möglich, durch Verstärkungsfäden hindurchzunähen und trotzdem ein axiales Verschieben, d.h. ein Verschieben in Längsrichtung beim räumlichen Verformen zu erreichen.

Das Grundmaterial darf die räumliche Verformung nicht behindern. Dies kann beispielsweise bei einem Glasgewebe dadurch erfolgen, daß dieses zwischen der festen und der verschiebbaren Vernähung vor der räumlichen Verformung durchtrennt wird. Damit ist in den Bereichen der räumlichen Verformung kein Grundmaterial vorhanden. Für ein LFV-Bauteil ist dies ohne Belang.

Es kann aber auch eine leicht dehnbare Folie als Grundmaterial verwendet werden, die eine räumliche Verformung mitmacht oder zerreißt.

Bei Verwendung eines schwer dehnbaren thermoplastischen Grundmaterials, wie Polyestervlies, kann an den zu trennenden Stellen ein elektrischer Widerstandsdraht positioniert werden, der durch die Aufheizung beim Anlegen einer Spannung eine Materialtrennung hervorruft.

Eine weitere Möglichkeit für das Grundmaterial besteht darin, daß eine thermoplastische Folie verwendet wird, die durch eine thermische Behandlung aufschmilzt und sich durch die Oberflächenspannung an den Kreuzungspunkten der Verstärkungsfäden zusammenzieht. Vorteilhaft wäre in diesem Fall, wenn dabei ein Fließpapier verwendet wird, welches die Schmelztropfen aufsaugt.

Das im Verstärkungsgebilde enthaltene Grundmaterial sowie die Nähfäden werden in den Verbund integriert. Wird eine duroplastische Matrix verwendet, z.B. Epoxidharz, so sind die Oberflächeneigenschaften des Grundmaterials und der Nähfäden darauf abzustimmen.
Im Falle von thermoplastischen Verbunden wird das Grundmaterial auf den thermoplastischen Anteil der Hybridfäden abgestimmt und mit diesem zusammen beim Konsolidieren zur Matrix umgeformt.

Da das Grundmaterial nur eine technologische Hilfsfunktion besitzt, nämlich den Verstärkungsfaden beim Sticken entsprechend der x/y-Steuerung der Stickmaschine zu positionieren, kann es aus einem für duroplastische Verbunde zu verwendenden Verstärkungsgebilde auch entfernt werden, falls dieser im Kernbereich aus mehreren Lagen von Verstärkungfäden besteht, deren stabiler Zusammenhalt durch die Nähfäden gewährleistet ist. Das Entfernen des Grundmaterials kann - entsprechend seiner Substanz - thermisch-physikalisch (durch Ausschmelzen oder Aufschmelzen bei gleichzeitigem Aufsaugen) oder thermisch-pyrolytisch (durch Verbrennen oder Veraschen und Ausklopfen) oder chemisch (durch Auswaschen oder Auslösen) erfolgen. Unter diesem Aspekt kann als Grundmaterial beispielsweise dünne Polyethylenfolie, Spezialpapier oder Gewebe aus Alginatfäden eingesetzt werden.

Demgegenüber kommt es für die Nähfäden darauf an, daß sie diese Behandlungsprozeduren überstehen. Erfindungsgemäß ist auch der Einsatz dünner Metalldrähte (Leonische Drähte beispielsweise aus Messing, Kupfer) für Nähfäden vorgesehen.

Das räumliche Verformen oder speziell das Tiefziehen der beanspruchungsgerechten Verstärkungsgebilde kann technologisch durch Vibration unterstützt werden.

Im weiteren wird die Erfindung anhand mehrerer Ausführungsbeispiele näher erläutert.

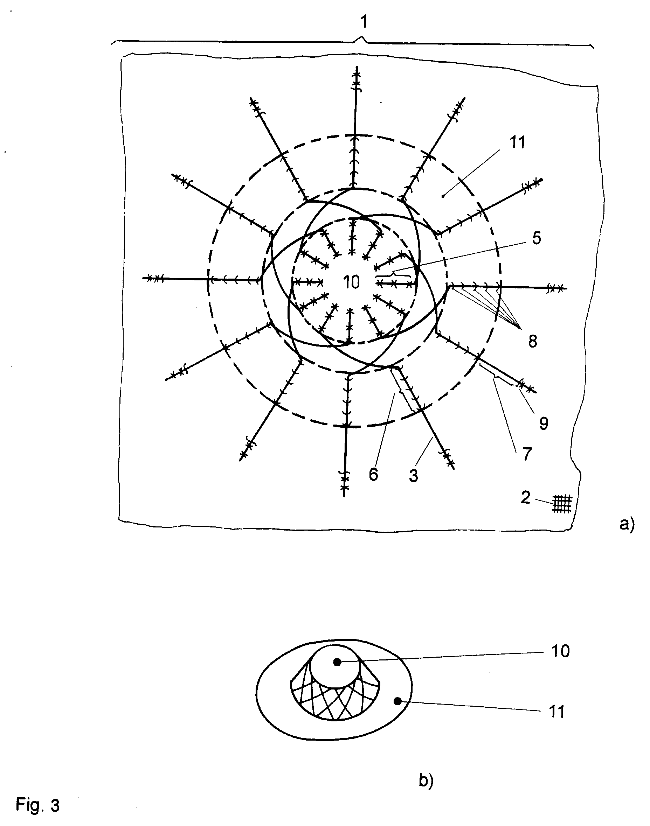

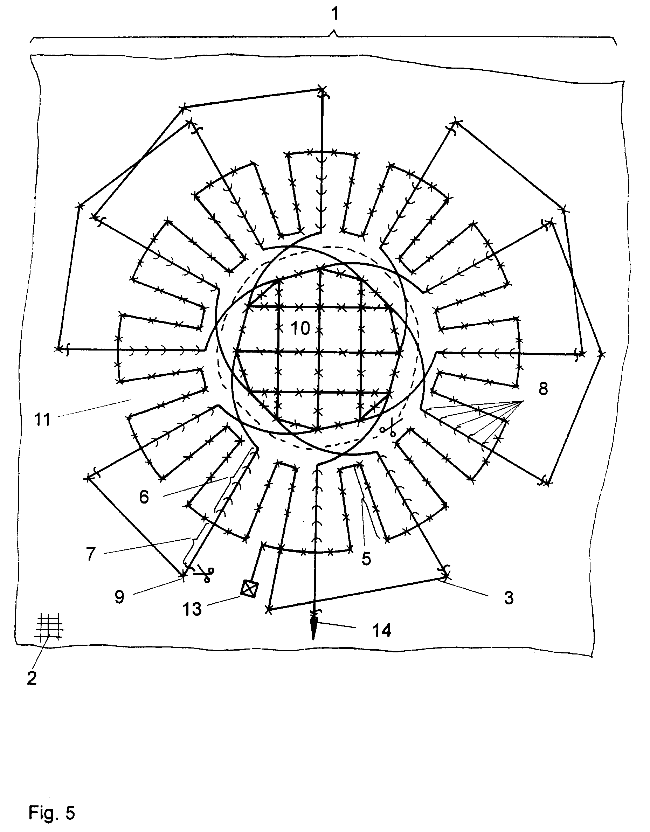

Dabei zeigen:

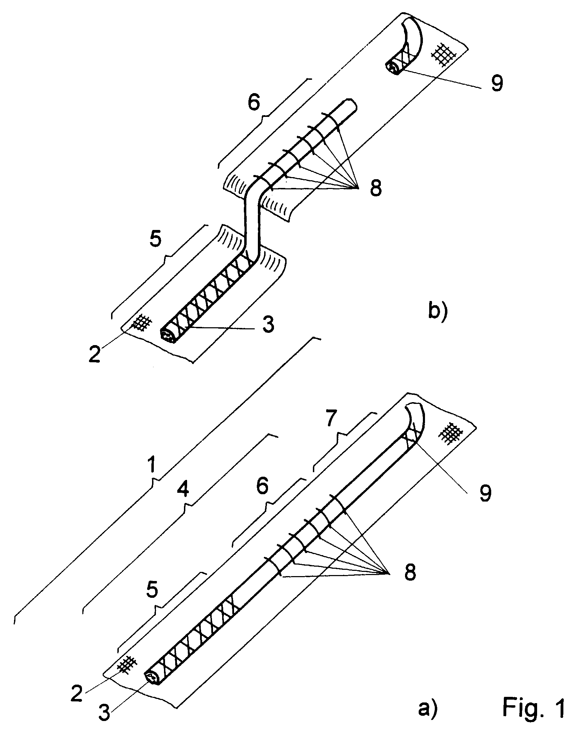

- Fig. 1:: das Grundprinzip der erfindungsgemäßen Lösung für einen einzelnen tiefziehfähigen Verstärkungsfaden 3
mit a) in der Ebene hergestellt und
mit b) nach der räumlichen Verformung
- Fig. 2:: die schematische Darstellung der erfindungsgemäßen Lösung zum beanspruchungsgerechten Verstärken einer Platte mit zwei Sicken
mit a) in einer Ebene hergestellt und
mit b) nach der räumlichen Verformung
- Fig. 3:: die erfindungsgemäße Lösung an einem hutartigen Bauteil
mit a) die räumlich verformbaren Verstärkungsfäden 3 schematisch in einer Ebene hergestellt und
mit b) die Verstärkungsfäden 3 nach der räumlichen Verformung perspektivisch
- Fig. 4:: die erfindungsgemäße Lösung an einem U-förmigen T-Profil
mit a) das Verstärkungsgebilde 1 in einer Ebene schematisch dargestellt und
mit b) das Verstärkungsgebilde 1 nach der räumlichen Verformung
mit c) als Detail der räumlich verformbaren Verstärkungsfäden 3 im Bereich des Zwickels 12 in einer Ebene
mit d) als Detail des Zwickels 12 nach der räumlichen Verformung
- Fig. 5:: schematisch den Verlegungsplan für ein hutartiges Bauteil nach Fig. 3

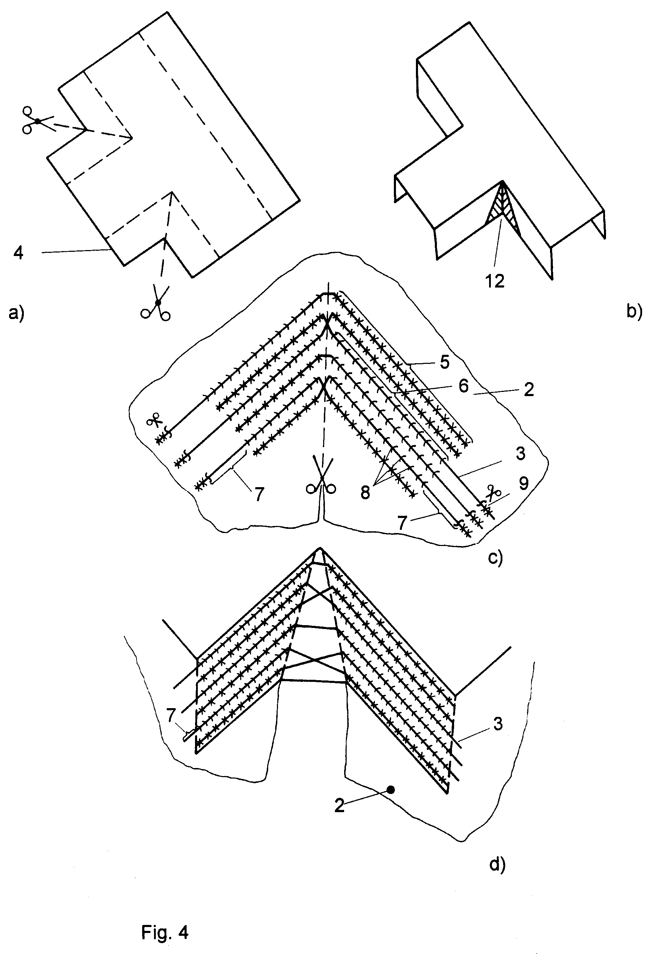

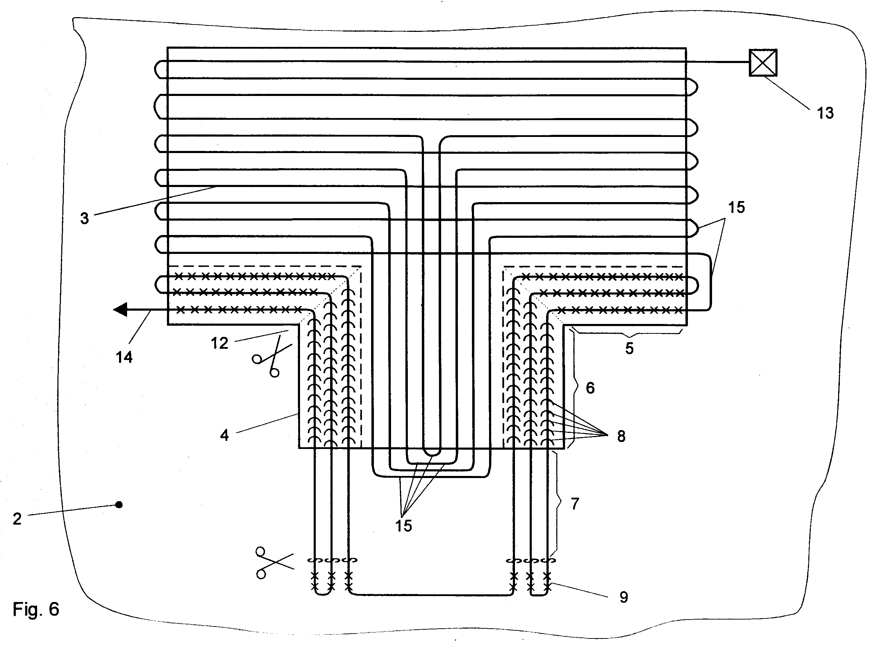

- Fig. 6:: schematisch den Verlegungsplan für ein U-förmiges T-Profil nach Fig. 4

### Beispiel 1

Auf ein Grundmaterial 2 wird ein Verstärkungsfaden 3 teils fest angenäht und teils in einem aus Nähfaden-Schlaufen gebildeten Tunnel 8 positioniert, wodurch der Verstärkungsfaden 3 axial verschiebbar ist. Der festgenähte Teil 5 und der verschiebbare Teil 6 stellen den Kernbereich 4 des beanspruchungsgerechten Verstärkungsgebildes 1 dar. Außerhalb dieses Kernbereiches 4 wird der Verstärkungsfaden 3 nach einem Fadenvorrat 7 am Grundmaterial 2 fixiert. Der Fadenvorrat 7 außerhalb vom Kernbereiches 4 des Verstärkungsgebildes 1 weist eine Länge auf, die mindestens der späteren räumlichen Verformung entspricht. Vor der räumlichen Verformung, dem Tiefziehen, wird der Verstärkungsfaden 3 nach dem Fadenvorrat 7 durchtrennt. Ebenso durchtrennt wird das Grundmaterial 2 zwischen dem festgenähten Teil 5 und dem verschiebbaren Teil 6. Beim räumlichen Verformen wird der festgenähte Teil 5 fest eingespannt und tiefgezogen, während im verschiebbar genähten Teil 6 der Verstärkungsfaden 3 aufgrund des Fadenvorrates 7 und seiner Führung im Tunnel 8 nachrutschen kann, wobei die geometrische Positionierung des Verstärkungsfadens 3 erhalten bleibt.

### Beispiel 2

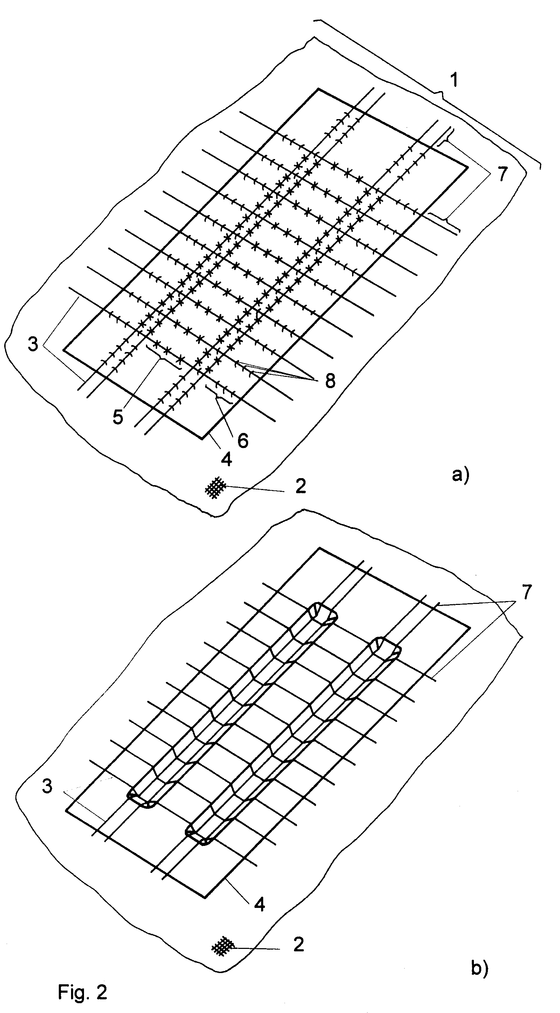

Entsprechend Fig. 2 a) sind auf einem Grundmaterial 2 aus Carbon-Gewebe Verstärkungsfäden 3 aus Carbon-Rovings angeordnet. Im Kernbereich 4 sind die Verstärkungsfäden 3 teils fest (Kreuze) und teils verschiebbar (Halbkreise) mit Polyester-Nähfäden angenäht. Ferner sind die Fadenvorräte 7 gezeichnet.

Im Kernbereich 4 des Verstärkungsgebildes 1 sind weiterhin noch weitere, gleiche Verstärkungsfäden 3 angeordnet und mit dem Grundmaterial 2 fest vernäht worden, um die beanspruchungsgerechte Positionierung aller Verstärkungsfäden 3 auf dem Grundmaterial 2 zu gewährleisten, aber die räumliche Verformung nicht zu behindern.

Vor der räumlichen Verformung ist das Carbongewebe längs der Sicken aufgeschnitten worden, um die räumliche Verformung nicht zu behindern.

Fig. 2b zeigt den räumlich verformten Zustand in perspektivischer Darstellung. Die Fadenvorräte 7 sind durch die gebildeten Sicken zum Teil aufgebraucht.

Die Verbundbildung erfolgt in einer Form mit Epoxidharz in einem Vakuum-Tränkverfahren.

### Beispiel 3

Fig. 3 zeigt das erfindungsgemäße Prinzip für ein hutartiges Bauteil. In Fig. 3a sind die an der späteren Verformung beteiligten Verstärkungsfäden 3 in der Draufsicht dargestellt, während mit Fig. 3b ein Eindruck vom räumlich verformten Zustand vermittelt wird. Der Deckel 10 stellt den fest vernähten Teil dar (Kreuze), während in der Krempe 11 die Verstärkungsfäden 3 verschiebbar positioniert sind (Halbkreise). Die Fadenvorräte 7 sind radial angeordnet und in ihrer Länge werden sie durch die Fixierungen 9 begrenzt. Als Vorbereitung zum Tiefziehen erfolgt dann an diesen Stellen die Durchtrennung, und das Grundmaterial 2 wird zwischen Deckel 10 und Krempe 11 durchtrennt. Bedingt durch die gegenläufige Führung der Verstärkungsfäden 3 von der Krempe 11 zum Deckel 10 sowie zurück ergibt sich nach dem Tiefziehen im Bereich des konischen Teiles eine Fachwerk-artige Struktur.

### Beispiel 4

Fig. 4 zeigt ein U-förmiges T-Profil entsprechend der erfindungsgemäßen Lösung. Fig. 4 a zeigt die Abwicklung des Kernbereiches 4 eines Verstärkungsgebildes 1 mit Andeutung der notwendigen Einschnitte an den beiden Innenecken.
Fig. 4b zeigt das T-Profil in perspektivischer Darstellung nach der räumlichen Verformung. Hervorgehoben ist der Zwickel 12, für den bei einer Verformung aus der Ebene Fläche erforderlich ist.
Fig. 4c zeigt in der Draufsicht ein Detail: Die an der räumlichen Verformung beteiligten Verstärkungsfäden 3 im Bereich des Zwickels 12. Die Fadenvorräte 7 sind an beiden Schenkeln des T-Profils angelegt, und an der Ecke sind die Verstärkungsfäden 3 teilweise parallel und teilweise verkreuzend geführt. Nach der räumlichen Verformung (Fig. 4d) ergibt sich deshalb teilweise eine fachwerkartige Struktur und der Fadenvorrat 7 ist zum Teil aufgebraucht.

### Beispiel 5

Das beanspruchungsgerechte Positionieren und Aufnähen des Verstärkungsfadens 3 zum Herstellen der räumlich verformbaren beanspruchungsgerechten Verstärkungsgebilde 1 erfolgt vorteilhaft mit Hilfe einer rechnergestützten Sticktechnologie. Hierbei ist es zweckmäßig, die im Verstärkungsgebilde 1 nebeneinander liegenden Verstärkungsfäden 3 so miteinander zu verbinden, daß das Aufnähen vom Anfang bis zum Ende 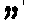 in einem Zuge" erfolgen kann.

Fig. 5 zeigt das in Fig. 3 im Prinzip beschriebenen Verstärkungsgebilde 1 für ein hutartiges Bauteil in einer vereinfachten Ausführung vor dem Tiefziehen in der Draufsicht. Das Aufsticken des Verstärkungsfadens 3 aus Carbonroving auf das Grundmaterial 2 aus Glasgewebe mit Finish-Behandlung mit einem Polyester-Nähfaden als Ober- und Unterfaden erfolgt 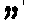 in einem Zuge". Der Startpunkt befindet sich bei 13 und der Endpunkt bei 14. Im Bereich des Deckels 10 ist der Verstärkungsfaden 3 rechtwinklig positioniert und fest vernäht (Kreuze). Im Bereich der Krempe 11 ist der Verstärkungsfaden 3 teilweise mäanderförmig positioniert und fest genäht. Vorher wurde im Bereich der Krempe 11 beanspruchungsgerecht eine spiralartige Schicht aus Verstärkungsfäden 3 aufgenäht

Vom Deckel 10 zur Krempe 11 verläuft der Verstärkungsfaden 3 jeweils schräg und auch kreuzweise, um eine fachwerkartige Struktur im konischen Teil zu erreichen (siehe Fig. 3b). Desweiteren wird der Verstärkungsfaden 3 im Bereich der Krempe 11 radial in Tunneln 8 positioniert (Halbkreise) und nach dem Fadenvorrat 7, der hier durch die Krempe 11 begrenzt wird, fixiert. Die dadurch gebildeten Fadenvorräte 7, deren Länge vom Grad der räumlichen Verformung abhängt, werden vor dem Tiefziehen durchtrennt und somit für eine axiale Verschiebung in den Tunneln 8 zum Ausformen des konischen Teils freigegeben. Vor dem Tiefziehen wird das Grundmaterial 2 zwischen dem späteren konischen Teil und der Krempe 11 durchtrennt.

Nach dem Tiefziehen wird beanspruchungsgerecht der konische Teil noch tangential mit Carbonroving umwickelt. Die Verbundbildung erfolgt mit Epoxidharz in einer Form im Vakuum-Tränkverfahren.

### Beispiel 6

Fig. 6 zeigt das in Fig. 4 im Prinzip beschriebenen Verstärkungsgebilde 1 für ein U-förmiges T-Profil vor der räumlichen Verformung in der Draufsicht. Dargestellt ist die oberste Lage von Verstärkungsfäden 3. Unter dieser gezeichneten Lage sind beanspruchungsgerecht noch weitere Lagen mit jeweils senkrechter und diagonaler Positionierung von Verstärkungsfäden 3 vorhanden, die jedoch an der Ausbildung der Zwickels 12 (siehe Fig. 4b) nicht beteiligt sind.

Das Grundmaterial 2 besteht aus Polyamidfolie, auf das als Verstärkungsfaden 3 ein aus Glas- und Polyamidfäden bestehender Hybridfaden (commingled yarn) mit Hilfe der Sticktechnik aufgenäht wurde. Der Anteil Glas beträgt dabei etwa 50 % des Gesamtvolumens aus Glas und Polyamid. Als Stickfäden werden für Ober- und Unterfäden feine Messingdrähte (Leonische Fäden) verwendet.

Das Aufnähen beginnt beim Startpunkt 13 und endet beim Endpunkt 14. Außerhalb des Kernbereiches 4 des Verstärkungsgebilde 1 erfolgen jeweils die Umlenkungen 15, die das Aufsticken 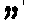 in einem Zuge" ermöglichen. Zum Gestalten der Zwickel 12 wird der Verstärkungsfaden 3 im Bereich der Schenke! teils fest (Kreuze) und teils verschiebbar (Halbkreise) angenäht, gefolgt vom Fadenvorrat 7 und den Fixierungen 9. Vor der räumlichen Verformung werden die Verstärkungsfäden 3 nach dem Fadenvorrat 7 und das Grundmaterial 2 in der Diagonale der Zwickel 12 durchtrennt.

Über die Verarbeitungsstufen Konsolidieren und Pressen entsteht ein U-förmiges T-Profil-Verbundbauteil, bestehend aus langfaserverstärktem Thermoplast auf Basis Glas und Polyamid. Die zum Nähen verwendeten Leonischen Fäden verhindern ein 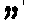 Schwimmen" in der Presse, behindern jedoch die Funktion des Bauteils nicht.

### Bezugszeichenliste

- 1: beanspruchungsgerechtes Verstärkungsgebilde
- 2: Grundmaterial
- 3: Verstärkungsfäden
- 4: Kernbereich
- 5: fester Teil
- 6: verschiebbarer Teil
- 7: Fadenvorrat
- 8: Schlaufen/Tunnel
- 9: Fixierung
- 10: Deckel
- 11: Krempe
- 12: Zwickel
- 13: Startpunkt
- 14: Endpunkt
- 15: Umlenkung

## Patentansprüche

1. Beanspruchungsgerechtes Verstärkungsgebilde (1) zur Herstellung räumlich verformter dreidimensionaler Langfaser-Verbund-Bauteile, bei denen Verstärkungsfäden (3) in einer oder mehreren Lagen übereinander auf ein ebenes Grundmaterial (2) aufgenäht oder am Grundmaterial (2) positioniert und befestigt sind, wobei die Legung der Verstärkungsfäden (3) zumindest bereichsweise entsprechend einer beanspruchungsgerechten Verstärkung erfolgt ist, mit einem Kernbereich (4) in dem die Verstärkungsfäden (3) in den Bereichen, die nicht räumlich verformt werden, ganz oder zum Teil unverschiebbar mit dem Grundmaterial (2) vernäht sind, und in dem die Verstärkungsfäden (3) in den Bereichen, die räumlich verformt werden, ganz oder zum Teil verschiebbar am Grundmaterial (2) positioniert und befestigt sind, wobei die Positionierung dadurch erfolgt, daß der oder die Verstärkungsfäden (3) durch einen oder mehrere Tunnel (8), gebildet aus Nähfäden oder Verstärkungsfäden (3), laufen und dabei in Längsrichtung verschiebbar sind und bei denen die den oder die Tunnel (8) durchlaufenden Verstärkungsfäden (3) außerhalb des Kernbereiches (4) einen Fadenvorrat (7) aufweisen, der mindestens der Länge der vorgesehenen räumlichen Verformung entspricht und bei denen das Grundmaterial (2) die vorgesehene räumliche Verformung nicht behindert.

2. Beanspruchungsgerechtes Verstärkungsgebilde (1) nach Anspruch 1, bei denen die Verstärkungsfäden (3) aus aromatischen Polyamidfasern, Glas- oder Carbonfasern, pflanzlichen Naturfasern bestehen.

3. Beanspruchungsgerechtes Verstärkungsgebilde (1) nach Anspruch 1, bei denen das Grundmaterial (2) aus einem Gewebe, Vlies oder einer Folie besteht.

4. Beanspruchungsgerechtes Verstärkungsgebilde (1) nach Anspruch 1, bei denen das Aufnähen der Verstärkungsfasern (3) auf das Grundmaterial (2) durch eine Sticktechnologie erfolgt ist.

5. Beanspruchungsgerechtes Verstärkungsgebilde (1) nach Anspruch 1, bei denen der oder die Fäden zum Aufnähen, Befestigen oder Positionieren der Verstärkungsfasern (3) aus Nähfäden auf einem organischen Material, aus Leonischen Fäden oder aus einem Verstärkungsmaterial bestehen.

6. Beanspruchungsgerechtes Verstärkungsgebilde (1) nach Anspruch 1, bei denen die Positionierung der Verstärkungsfäden (3) durch einen Tunnel (8) aus Schlaufen von Fäden erfolgt ist.

7. Beanspruchungsgerechtes Verstärkungsgebilde (1) nach Anspruch 6, bei denen die Positionierung der Verstärkungsfäden (3) durch einen Tunnel (8) aus Schlaufen von Nähfäden erfolgt ist.

8. Beanspruchungsgerechtes Verstärkungsgebilde (1) nach Anspruch 6, bei denen die Positionierung der Verstärkungsfäden (3) durch einen Tunnel (8) aus Schlaufen von Verstärkungsfäden (3) erfolgt ist.

9. Beanspruchungsgerechtes Verstärkungsgebilde (1) nach Anspruch 6 oder 7 oder 8, bei denen der Tunnel (8) keinen gradlinigen Verlauf aufweist.

10. Beanspruchungsgerechtes Verstärkungsgebilde (1) nach Anspruch 1, bei dem ein Verstärkungsfadenvorrat (7) nach dem oder den Tunneln (8) außerhalb des Kernbereiches (4) angeordnet ist, der endet oder als Verstärkungsfaden (3) in einer endlosen Verlegung weitergeführt wird.

11. Beanspruchungsgerechtes Verstärkungsgebilde (1) nach Anspruch 1, bei denen zwischen den Bereichen, die räumlich verformt werden und denen die nicht räumlich verformt werden, die Verstärkungsfäden (3) in gerader oder radialer oder in anderer Richtung, gegenüberliegend oder versetzt verlaufen.

12. Beanspruchungsgerechtes Verstärkungsgebilde (1) nach Anspruch 1, bei denen das Grundmaterial (2) die räumliche Verformung nicht behindert, indem es ganz oder teilweise eingeschnitten, zerschnitten, getrennt, zerrissen, zerstört, beseitigt, ist.

13. Beanspruchungsgerechtes Verstärkungsgebilde (1) nach Anspruch 12, bei denen das Grundmaterial (2) zwischen den Bereichen, die die beiden Seiten der räumlichen Verformung bilden, ganz oder teilweise eingeschnitten, zerschnitten, getrennt, zerrissen, zerstört, beseitigt ist.

14. Beanspruchungsgerechtes Verstärkungsgebilde (1) nach Anspruch 1, bei denen das Grundmaterial (2) thermisch-physikalisch oder thermisch-pyrolytisch oder chemisch zerstört oder beseitigt ist.

15. Beanspruchungsgerechtes Verstärkungsgebilde (1) nach Anspruch 1, bei dem das Ende des Fadenvorrates (7) unverschiebbar mit dem Grundmaterial (2) vernäht ist und vor der Verformung der Verstärkungsfaden (3) am Ende des Fadenvorrates (7) durchtrennt ist.
